# DEMANDE DE BREVET EUROPEEN

(11) **EP 2 000 867 A1**
(43) Date de publication de la demande: **10.12.2008**
(21) Numéro de dépôt: 08157475.8
(22) Date de dépôt: 03.06.2008
(51) Int. Cl.: G05B 19/042

(54) **Procédé de configuration d'un ensemble domotique réagissant à un événement climatique**

(30) Priorité: 05.06.2007 FR 0704007
(71) Demandeur: Somfy SAS, 74307 Cluses (FR)
(72) Inventeur: Augustin, Barbara, 74950, SCIONZIER (FR); Pellarin, Florent, 74370, SAINT MARTIN BELLEVUE (FR)
(74) Mandataire: Bugnion Genève

(57) **Abrégé**

Procédé de configuration d'un ensemble domotique (1) comprenant plusieurs éléments dont un actionneur (2) de manoeuvre d'un écran mobile (3) entre deux positions extrêmes et un automatisme (20) destiné à commander l'actionneur et muni d'un capteur (24, 25) pour détecter un phénomène climatique, l'actionneur et l'automatisme étant destinés à communiquer entre eux, caractérisé en ce qu'une information choisie de position de l'écran ou de mouvement de l'écran, est enregistrée et associée à une information caractérisant une relation de communication entre l'actionneur et l'automatisme, au niveau d'un élément de l'ensemble domotique.

## Description

L'invention concerne le domaine des actionneurs d'écrans mobiles pour la protection solaire, la fermeture ou l'occultation et des points de commande qui leur sont associés. Les points de commande dans une installation domotique comprenant lesdits actionneurs peuvent comprendre des interfaces de commande manuelle et/ou des automatismes de commande. Ces derniers sont généralement munis de capteurs (vent, pluie, temps, etc.) qui fournissent à l'automatisme au moins une valeur mesurée.

L'automatisme de commande comprend également une partie électronique de commande, au travers de laquelle il est capable de transmettre une information à destination de l'actionneur.

Par exemple, dans le cas d'un store de terrasse, un automatisme comprenant un capteur vent de sécurité va fournir un ordre de repli lorsque la valeur de vent ou d'effet du vent) mesurée par le capteur sera supérieure à une valeur prédéfinie. L'automatisme pourra également envoyer un signal informant l'actionneur que le seuil du phénomène climatique mesuré est dépassé. L'actionneur décide alors de l'action à mettre en oeuvre, sans nécessairement connaître quel est ce seuil, cette action étant par défaut allouée à l'actionneur selon son type ou le type de produit qu'il manoeuvre. Alternativement, la valeur mesurée ou une donnée correspondant à cette valeur mesurée est transmise à l'actionneur qui décide alors de l'action à mettre en oeuvre (la valeur prédéfinie de comparaison est stockée au niveau de l'actionneur). L'action à mettre en oeuvre est de nouveau prédéterminée en fonction de l'actionneur et du type de produit qu'il manoeuvre.

Dans le cas de communications plus élaborées entre l'automatisme et l'actionneur, par exemple si ceux-ci communiquent de manière bidirectionnelle, il est possible d'augmenter les possibilités d'actions en fonction de la mesure par le capteur. C'est alors le capteur qui décide, en fonction du type d'actionneur qu'il pilote (avec lequel il est appairé) et du type de capteur qu'il est, vers quelle position l'actionneur doit piloter l'écran. Cette position, le type de commande sont généralement prédéfinis par le constructeur. Leur modification par la suite requiert une interface plus évoluée de l'automatisme et/ou une nouvelle procédure de réglage.

Si on reprend par exemple le cas d'un store de terrasse, cette fois-ci couplé avec un capteur de pluie, deux réactions différentes peuvent être souhaitées: soit on privilégie la protection de la toile du store, auquel cas le store est remonté en cas de pluie, soit on privilégie la protection des biens et personnes sous la toile du store (par exemple la clientèle dans le cas d'un store de terrasse de café) et le store descend dès que de la pluie est détectée. Ces deux configurations ne sont pas souvent disponibles.

La réaction à l'événement détecté, ici la présence de pluie, est définie dans l'état de l'art principalement par la position d'un sélecteur sur le capteur: l'enroulement ou le déroulement du store est alors sélectionné en réponse à l'événement signalé par le capteur et le signal du capteur contient l'information de mouvement à réaliser.

Alternativement, le mouvement à réaliser est un mouvement par défaut stocké au niveau de l'actionneur. Celui-ci n'est alors que difficilement modifiable. Un outil de configuration TTP fabriqué par la société NICE possède une touche d'inversement de direction de mouvement en cas de pluie. L'installateur peut donc, à partir de l'outil TTP, changer la réaction de l'actionneur à un événement pluie transmis par l'automatisme. Cependant, l'outil nécessite d'être physiquement connecté sur les câbles d'alimentation de l'actionneur, ce qui complique sa mise en oeuvre et réduit les possibilités pour un utilisateur d'intervenir lui-même. De plus, cet outil ne prévoit qu'une inversion de la direction (descente ou remontée complète du store) et non pas un choix plus large parmi diverses positions à atteindre.

On connaît par ailleurs des installations dans lesquelles il est possible de sauvegarder des positions ou états particuliers d'un ensemble d'équipements domotiques, ces positions ou états pouvant être rappelés (recréés) par une commande dite de scénario. C'est le cas par exemple dans le brevet EP 0 570 281 où les positions particulières sont mémorisées au niveau d'un appareil ou d'une télécommande de scénario ou dans la demande US 2005/055108 où chaque équipement met dans sa propre mémoire la position ou l'état particulier qu'il doit atteindre lorsqu'il reçoit une commande de type lancement de scénario. La configuration d'un scénario nécessite que l'ensemble du réseau soit déjà en place, c'est à dire que les groupes d'objets communicants soient définis. Une interface utilisateur doit généralement être prévue au niveau des équipements domotiques pour la configuration de ce scénario. Dans ces documents, il existe un décalage temporel entre la configuration des relations entre les différents objets de l'ensemble domotique et l'apprentissage du scénario. De plus, la position enregistrée pour un scénario doit être rappelée manuellement par l'utilisateur lorsqu'il a un besoin spécifique à un instant t.

Par ailleurs, il est fait mention dans la demande de brevet EP 0 570 281 citée ci-dessus d'un appareil d'enregistrement et de reproduction sous forme d'un programmateur horaire muni d'une horloge. Celui-ci a alors une interface utilisateur de commande et de programmation qui comprend notamment un bouton de télécommande actionné automatiquement lorsqu'un horaire prédéterminé par programmation de l'horloge est atteint. A la différence d'un automatisme avec un capteur de mesure d'un phénomène climatique, le programmateur horaire envoie des ordres prédéfinis indépendants de la mesure, c'est-à-dire que la commande n'est pas liée à la valeur du phénomène détecté, que l'actionneur ne reçoit aucune indication de la mesure de temps ou que du moins, il n'a pas l'utilité d'une telle mesure.

Ces différents documents ne fournissent pas d'indication sur la configuration d'une réaction possible à une commande en provenance d'un automatisme muni de capteur de phénomène climatique, en particulier dans le cas où seule une interface utilisateur très limitée est prévue pour cette configuration.

Le but de l'invention est de fournir un procédé de configuration d'un ensemble domotique remédiant aux inconvénients évoqués précédemment et améliorant les procédés de configuration connus de l'art antérieur. En particulier, l'invention propose un procédé de configuration simplifié permettant la configuration aisée des réactions d'un dispositif domotique suite à un événement climatique. L'invention propose en outre un ensemble domotique pour la mise en oeuvre d'un tel procédé de configuration.

Le procédé de configuration selon l'invention est défini par la revendication 1.

Différents modes d'exécution du procédé de configuration selon l'invention sont définis par les revendications dépendantes 2 à 9.

Le procédé de commande selon l'invention est défini par la revendication 10.

L'ensemble domotique selon l'invention est défini par la revendication 11.

Le dessin annexé représente, à titre d'exemple, un mode d'exécution d'un procédé de configuration selon l'invention, des modes d'exécution d'un procédé de commande et un ensemble domotique selon l'invention.

La figure 1 est un schéma d'un mode de réalisation d'un ensemble domotique selon l'invention.

La figure 2 est un schéma détaillé d'un automatisme du mode de réalisation de l'ensemble domotique de la figure 1.

La figure 3 est un schéma détaillé d'un actionneur du mode de réalisation de l'ensemble domotique de la figure 1.

La figure 4 est un schéma détaillé d'un mode d'exécution du procédé de configuration selon l'invention.

Les figures 5 et 6 sont des organigrammes détaillant le fonctionnement de deux modes de réalisation d'ensembles domotiques selon l'invention, ces ensembles étant du type à communication unidirectionnelle.

Les figures 7 et 8 sont des organigrammes détaillant le fonctionnement de deux modes de réalisation d'ensembles domotiques selon l'invention, ces ensembles étant du type à communication bidirectionnelle.

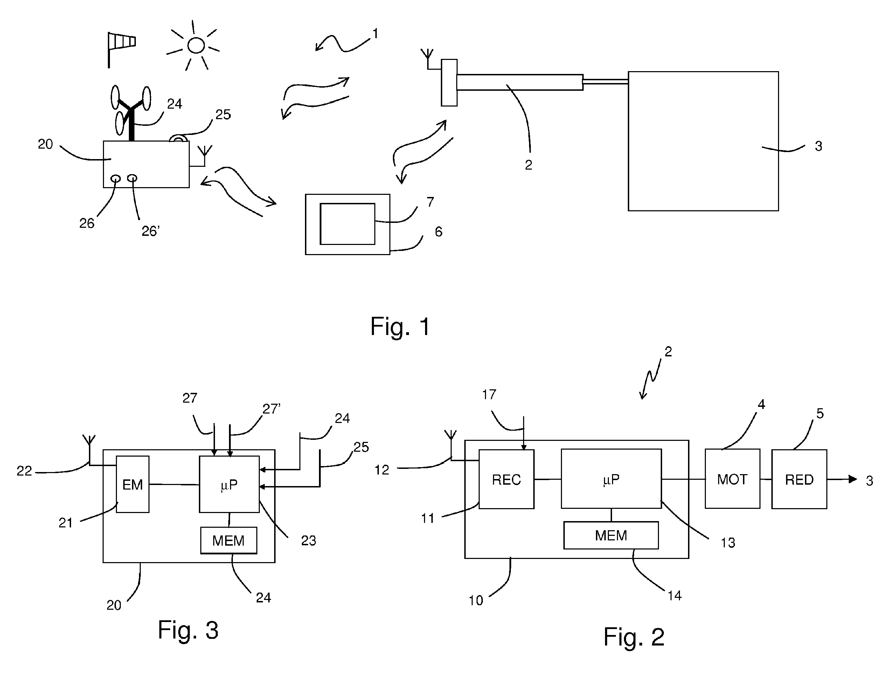

La figure 1 présente de manière schématique un ensemble domotique 1 comprenant plusieurs éléments dont un actionneur 2 électromécanique.

L'actionneur 2 permet de piloter en mouvement un écran 3 pouvant comprendre un élément de fermeture, d'occultation ou de protection solaire. Cet élément peut consister par exemple en un store, en un volet roulant ou en une porte. L'actionneur comprend des moyens de communication sans fil tel que des moyens de communication par radiofréquences. L'ensemble domotique 1 comprend, notamment, comme autre élément, un automatisme 20 muni de différents capteurs de phénomènes climatiques. Dans le cas présent, il s'agit d'un automatisme dit "vent-soleil", c'est-à-dire qu'il comprend un capteur de vent 24, par exemple un anémomètre et un capteur d'éclairement 25 mesurant un niveau lumineux.

L'ensemble domotique comprend, encore, comme autre élément, un point de commande utilisateur 6, comprenant une interface utilisateur 7. Lors d'appui sur des touches de cette interface 7, l'utilisateur peut provoquer des ordres de déplacement de l'écran 3 dans le sens choisi correspondant à la touche, par exemple une montée, une descente, un déplacement vers une position intermédiaire. Ces ordres sont envoyés à l'actionneur par radio et exécutés par l'actionneur.

Le point de commande peut être utilisé pour la configuration de l'actionneur en ce qui concerne par exemple les définitions des positions de fin de course.

L'automatisme 20 et l'actionneur 2 ou le point de commande 6 et l'actionneur 2 dialoguent grâce à des moyens non filaires par exemple selon un protocole radio prédéfini, qui peut être unidirectionnel ou bidirectionnel. Le point de commande peut également dialoguer avec l'automatisme.

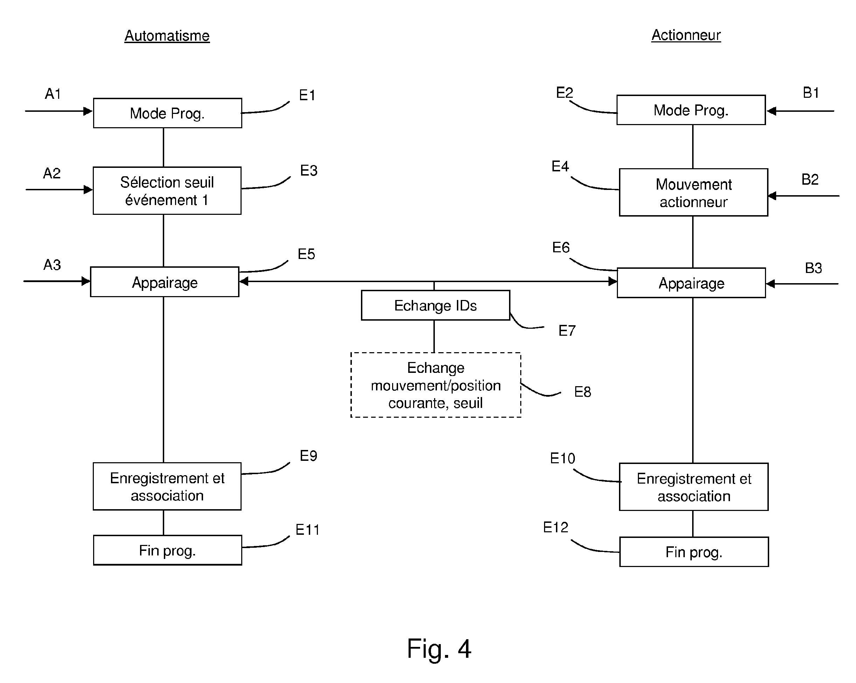

Dans un cas simple, l'automatisme 20 émet des messages à l'attention de l'actionneur 2. Lorsqu'il reçoit un message en provenance de l'automatisme 20, l'actionneur pilote le mouvement de l'écran 3. Ce mouvement dépend d'un certain nombre de paramètres qui sont en partie contenus dans le message et des configurations qui ont eu lieu au préalable comme décrit ci-après en référence à la figure 4.

Les figures 2 et 3 illustrent de manière plus détaillée les éléments constitutifs de l'actionneur 2 et de l'automatisme 20.

L'actionneur 2 comprend dans une partie de dispositif de commande 10 un récepteur radio 11 muni d'une antenne 12 de réception radio, un microprocesseur ou microcontrôleur 13 en liaison avec un ensemble mémoire 14. Le dispositif de commande 10 est relié à un ensemble moteur dit motoréducteur comprenant un moteur 4 et un réducteur 5. Le motoréducteur permet de transmettre un mouvement à l'écran 3 de manière connue en soi.

D'autres éléments constitutifs de l'actionneur sont utilisés notamment pour le comptage ou repérage de la position de l'écran, la gestion des positions de fin de course, etc.

D'autre part, l'automatisme 20 comprend un émetteur radio 21 muni d'une antenne de transmission radio 22 et un microprocesseur ou microcontrôleur 23 en liaison avec un ensemble mémoire 24.

Le microcontrôleur 23 comprend des entrées liées respectivement aux capteurs 24 et 25 et des entrées 27, 27' liées par exemple à des boutons de programmation 26 et 26' représentés en figure 1.

La communication entre l'automatisme et l'actionneur va dépendre de la réalisation d'un procédé de configuration décrit ci-dessous et conforme à l'invention.

Les microcontrôleurs 13 et 23 ainsi que les mémoires 14, 24 permettent de mettre en oeuvre les procédés de configuration et de commande décrits ci-après. Les mémoires 14 et 24 contiennent pour ce faire des moyens logiciels c'est-à-dire des programmes qui sont exécutés par les microprocesseurs de manière à régir le fonctionnement de l'installation tant lors de l'exécution des procédés de configuration que lors de l'exécution des procédés de commande. A ce titre les moyens matériels et logiciels comprennent un moyen de choix (ou de sélection) d'une information de position de l'écran ou de mouvement de l'écran, un moyen d'enregistrement de cette information, un moyen d'association de cette information à une information caractérisant une relation de communication entre l'actionneur et l'automatisme, au niveau d'un élément de l'ensemble domotique.

La figure 4 décrit schématiquement les différentes étapes mises en oeuvre par l'intermédiaire de l'installateur ou automatiquement lors de l'installation de l'ensemble domotique.

Sur une action A1 de l'installateur, l'automatisme rentre dans un mode particulier de programmation au cours d'une étape E1. Cette action A1 peut correspondre à un appui sur un bouton 26 de l'automatisme 20.

Par une action A2, l'installateur sélectionne un seuil d'intensité relatif à un premier phénomène climatique lors d'une étape E3. La sélection de seuil peut être réalisée soit par action sur un bouton de programmation 26 ou 26', par des appuis successifs ou par une action sur un potentiomètre, soit à distance par l'intermédiaire du point de commande utilisateur 6.

Cette dernière solution nécessite que l'automatisme puisse également intervenir en tant que récepteur d'information et éventuellement que ces deux objets soient appairés.

Alternativement, la sélection peut être faite par une action directe sur un des capteurs (par exemple en faisant tourner un anémomètre, bouger un accéléromètre) de manière à simuler la présence du phénomène climatique considéré et éventuellement son intensité.

Le seuil peut également être prédéfini en usine, auquel cas l'étape A2 est facultative.

Dans une étape E5, l'installateur initie une procédure d'appairage par une action A3.

Parallèlement à ces étapes, une action B1 sur l'actionneur (représentée par la flèche 17), qui peut être réalisée par l'intermédiaire du point de commande 6, permet de le faire entrer dans un mode de programmation au cours d'une étape E2.

Lors d'une étape B2, l'installateur place l'écran dans une position souhaitée dite position de sécurité. Si l'écran se trouve déjà dans la position souhaitée, il n'est pas nécessaire d'imprimer un mouvement à l'écran. On pourrait également étendre le principe à d'autres fonctions, de confort par exemple et 'apprendre' à l'actionneur la position à atteindre en cas d'apparition soleil et disparition soleil. Cela permet de disposer de capteurs fonctionnant de manière indépendante avec les actionneurs, et des points de commande simples, sans interface évoluée. Par rapport à l'état de l'art, cela apporte de la flexibilité (actuellement les positions de sécurité ou de confort sont embarquées par construction dans l'actionneur et figées) sans pour autant avoir recours à un outil de configuration.

De plus, dans le cas des capteurs de sécurité, on peut avoir non seulement une position 'générique' de sécurité, mais également une position 'spécifique' par type de capteur appairé au moteur : par exemple, le moteur d'un store de terrasse connaît la position sécurité vent, la position sécurité pluie, la position sécurité gel, qui peuvent être différentes et d'autre part, assorties d'un blocage du mouvement de l'actionneur pendant un temps défini et adapté à l'événement climatique détecté.

La position courante est alors sélectionnée comme étant la position à atteindre dans un mode usage en cas de dépassement de seuil lié au phénomène climatique et défini à l'étape E3.

Alternativement, l'installateur commande un mouvement de l'actionneur. Ce mouvement, ou la direction de mouvement, est enregistré comme le mouvement à réaliser dans un mode usage en cas de dépassement de seuil lié au phénomène climatique et défini à l'étape E3.

Une durée d'activation de l'actionneur entraînant son mouvement peut également être enregistrée comme paramètre, de sorte qu'au moment d'un événement climatique détecté qui nécessite un repositionnement de l'écran, celui-ci soit piloté dans le sens de mouvement prédéfini et pendant la durée enregistrée, plutôt que jusqu'à l'arrivée dans une position de fin de course.

Au cours d'une étape E6, l'installateur initie une procédure d'appairage par une action B3. Cette procédure n'est réellement initiée que lorsque les actions A3 et B3 ont été réalisées.

Cette procédure d'appairage est particulière dans le sens où, outre les informations relatives à une identification de l'un ou l'autre des éléments qui doivent communiquer ensemble, des informations relatives aux étapes précédentes sont échangées.

Un ensemble de premières informations comprenant :
- la position de sécurité ou de réaction choisie ou le sens de mouvement choisi, et
- l'événement climatique (défini par exemple par le seuil enregistré précédemment)
est échangé entre l'automatisme et l'actionneur dans une étape E8.

Un ensemble de deuxièmes informations comprenant par exemple un ou plusieurs identifiants et permettant de définir une relation de communication entre l'automatisme et l'actionneur est échangé entre l'automatisme et l'actionneur dans une étape E7.

Les étapes E7 et E8 peuvent avoir lieu dans un même temps, les différentes informations relatives à l'actionneur ou recueillies à ce niveau pouvant être échangées au cours d'une même trame d'un premier signal de communication et les différentes informations relatives à l'automatisme ou recueillies à ce niveau pouvant être échangées au cours d'une même trame d'un deuxième signal de communication.

Au cours d'étapes E9 et E10, les informations échangées au cours des étapes E7 et E8 ou simplement sélectionnées au cours des étapes E3 et E4 sont mémorisées, par l'actionneur ou l'automatisme selon les cas qui vont être décrits ci-après. Dans tous les cas, ces informations sont liées ou associées aux informations échangées. En quelque sorte, chaque objet communicant prépare au moment de l'appairage, une table de correspondance entre les valeurs sélectionnées, notamment les valeurs de seuil sélectionnées et au moins une des informations échangées. Ces associations sont représentées sous forme de doubles flèches sur les figures suivantes.

Les associations peuvent être réalisées par enregistrement de liens entre les premières et deuxièmes informations stockées en mémoires. Ces liens peuvent par exemple recréer une organisation matricielle des informations dans laquelle toutes les informations stockées dans une même ligne ou dans une même colonne sont associées.

Dans les étapes E11 et E12, l'automatisme et l'actionneur sortent respectivement des modes de programmation initiés aux étapes A1 et B1.

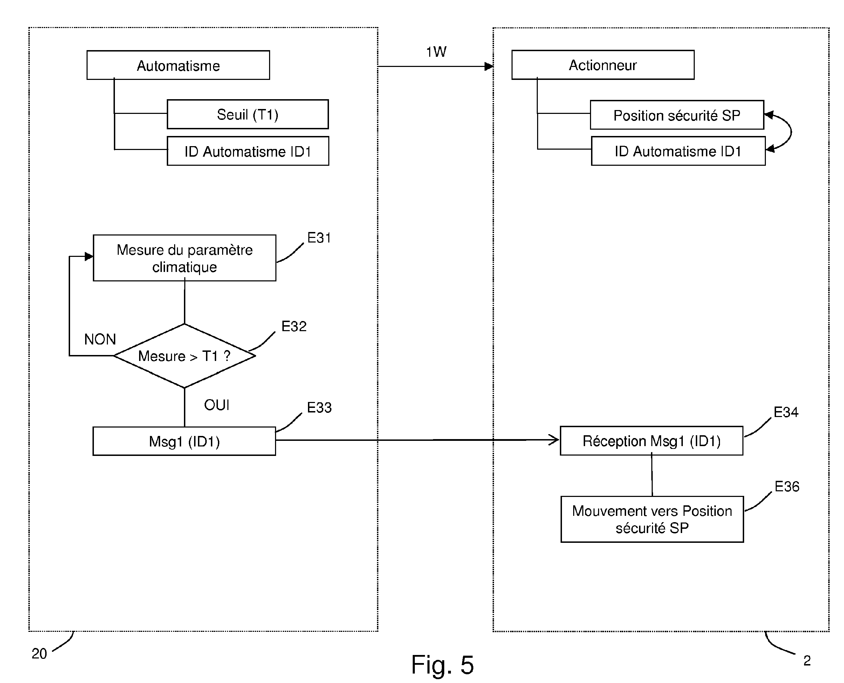

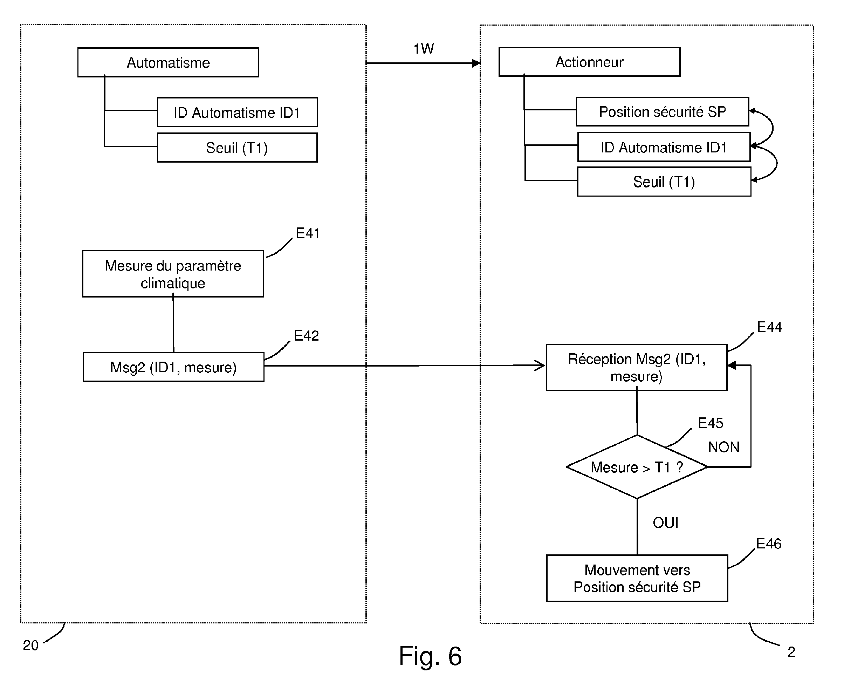

Les figures 5 et 6 représentent deux modes de fonctionnement d'un ensemble domotique selon l'invention, l'ensemble domotique étant du type à communication unidirectionnelle. L'automatisme 20 fonctionne comme un émetteur d'ordres et l'actionneur 2 comme un récepteur d'ordres.

Au cours de la procédure de configuration précédente, l'actionneur ne peut transmettre de données à l'automatisme alors que l'inverse est possible. Ainsi, pour l'appairage entre ces deux objets (de telle sorte que l'actionneur 2 puisse reconnaître les ordres comme lui étant adressés ou du moins le concernant, une information pouvant également être diffusée sans destinataire particulier), l'automatisme 20 transmet à l'actionneur 2 un identifiant ID1. Dans le cas de la figure 5, un seuil T1 réglé lors de la phase de configuration, est stocké au niveau de l'automatisme 20. II n'est pas transmis à l'actionneur. De même, une position de sécurité SP (ou un mouvement) définie dans la phase de configuration est stockée au niveau de l'actionneur. Celle-ci est associée à l'identifiant ID1 de l'automatisme au cours de la phase de configuration.

En mode usage, l'automatisme 20 mesure de manière continue ou intermittente régulière dans une étape E31 le phénomène climatique considéré par l'intermédiaire d'un des capteurs 24 ou 25.

Dans une étape E32, il teste si la mesure est supérieure au seuil T1. Si tel n'est pas le cas, il boucle sur l'étape E31. Au contraire, si tel est le cas, l'automatisme émet un message Msg1 au cours d'une étape E33 dans lequel il transmet au moins son identifiant ID1. Le message Msg1 lui-même peut constituer une information de dépassement de seuil. Alternativement, il peut comprendre une commande informant l'actionneur du dépassement de seuil ou une commande de mouvement vers une position de sécurité.

Le message Msg1 peut prendre par exemple la forme suivante : "Je suis ID1. Va dans ta position de sécurité, et si tu ne la connais pas, monte".

A la réception du message Msg1 au cours d'une étape E34, l'actionneur vérifie que le message lui est bien adressé ou au moins le concerne. Si le message Msg1 contient bien l'identifiant ID1 de l'automatisme, l'actionneur en déduit qu'il s'agit bien d'un ordre de mouvement vers la position de sécurité SP associée.

Dans une étape E36, un mouvement de l'écran 3 est alors réalisé par l'actionneur jusqu'à la position de sécurité SP stockée dans la mémoire 14 de l'actionneur 2.

Dans le cas de la figure 6, lors de la configuration, l'automatisme 20 a transmis à l'actionneur 2 un identifiant ID1 et le seuil T1. Le seuil peut également rester en mémoire de l'automatisme. La position de sécurité SP (ou le mouvement) définie dans la phase de configuration est stockée au niveau de l'actionneur et associée à l'identifiant ID1 de l'automatisme 20 et au seuil T1 lorsque ceux-ci sont transmis.

En mode usage, l'automatisme 20 mesure de manière continue ou intermittente régulière, dans une étape E41, le phénomène climatique considéré par l'intermédiaire d'un des capteurs 24 ou 25. L'automatisme émet, pour chaque mesure, ou pour un nombre régulier de mesures, un message Msg2 au cours d'une étape E42 dans lequel il transmet au moins son identifiant ID1 et la mesure ou une valeur obtenue par calcul à partir d'une série de mesures précédentes (par exemple une combinaison linéaire de mesures intervenues entre deux transmissions de messages). A la différence du message Msg1 précédent, le message Msg2 ne comprend pas de commande proprement dite. Il s'agit plutôt d'un message d'information.

Le message Msg2 peut prendre par exemple la forme suivante : "Je suis ID1. Voici le résultat de ma mesure :...".

A la réception du message Msg2 au cours d'une étape E44, l'actionneur vérifie que le message lui est bien adressé ou du moins le concerne. Si le message Msg2 contient bien l'identifiant ID1 de l'automatisme, l'actionneur en déduit qu'il s'agit bien d'un message d'information qui lui est destiné.

L'actionneur compare alors, au cours d'une étape E45, la mesure ou la valeur reçue dans le message Msg2 et le seuil T1 sélectionné et stocké en mémoire dans l'actionneur et associé à l'identifiant ID1.

Dans une étape E45, l'actionneur teste si la mesure ou la valeur est supérieure au seuil T1. Si tel n'est pas le cas, il boucle sur l'étape E44 où il attend la réception d'un nouveau message. Au contraire, si tel est le cas, un mouvement de l'écran 3 est alors réalisé par l'actionneur jusqu'à la position de sécurité SP stockée dans la mémoire 14 de l'actionneur 2.

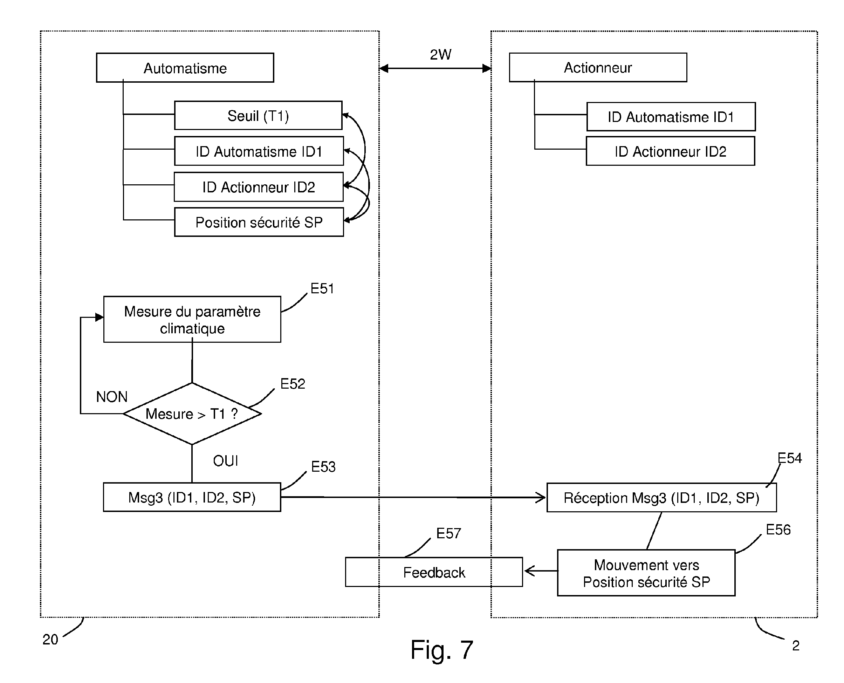

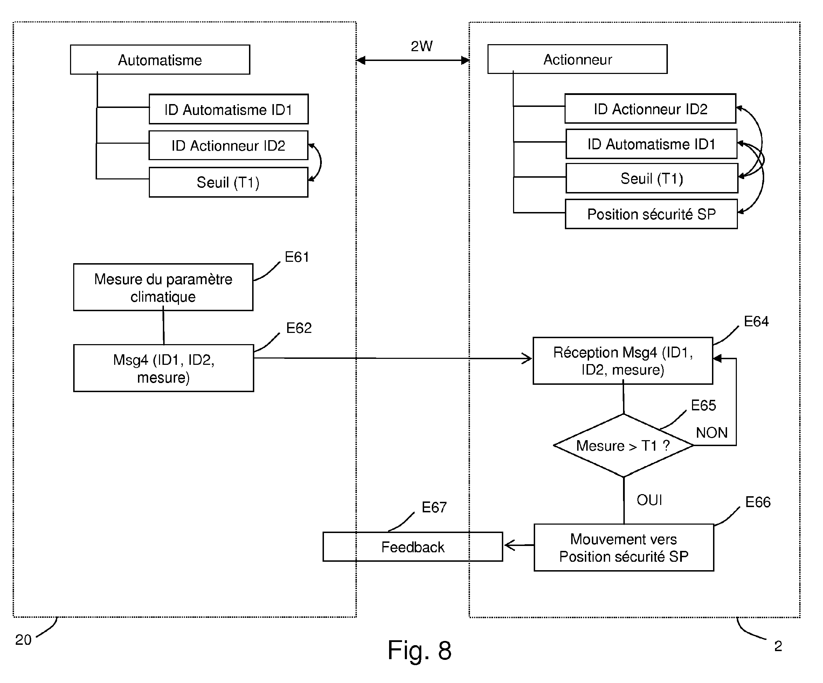

Les figures 7 et 8 représentent deux modes de fonctionnement d'un ensemble domotique selon l'invention, l'ensemble domotique étant du type à communication bidirectionnelle. L'automatisme 20 et l'actionneur 2 fonctionnent comme des émetteurs-récepteurs d'ordres.

Au cours de la procédure de configuration décrite en référence à la figure 4, l'actionneur et l'automatisme ont pu l'un et l'autre se transmettre des données. Ainsi, pour l'appairage entre ces deux objets (de telle sorte que l'actionneur 2 puisse reconnaître les ordres émanant de l'automatisme comme lui étant adressés ou du moins le concernant), l'automatisme 20 transmet à l'actionneur 2 un identifiant ID1. Inversement, le cas échéant, pour que l'automatisme 20 puisse reconnaître des messages de retour d'information provenant de l'actionneur 2, l'actionneur 2 transmet son identifiant ID2 à l'automatisme.

Ainsi, les deux objets communicants ont en mémoire, une fois qu'ils sont configurés, leur propre identifiant ainsi que celui de l'autre objet. II va de soi qu'un ou plusieurs identifiants peuvent être utilisés pour définir l'origine du message et/ou son destinataire.

Dans le cas de la figure 7, le seuil T1 réglé dans la phase de configuration décrite précédemment est stocké au niveau de l'automatisme 20. II n'a pas été transmis à l'actionneur. La position de sécurité SP (ou le mouvement) définie dans la phase de configuration a été transmise de l'actionneur 2 à l'automatisme 20. Ces deux paramètres sont associés aux différents identifiants (ID1 de l'automatisme et ID2 de l'actionneur, ces identifiants ayant été stockés en mémoire dans l'automatisme).

En mode usage, l'automatisme 20 mesure de manière continue ou intermittente régulière dans une étape E51 le phénomène climatique considéré par l'intermédiaire d'un des capteurs 24 ou 25.

Dans une étape E52, il teste si la mesure est supérieure au seuil T1. Si tel n'est pas le cas, il boucle sur l'étape E51. Au contraire, si tel est le cas, l'automatisme émet un message Msg3 au cours d'une étape E53 dans lequel il transmet au moins son identifiant ID1 et la position de sécurité SP. L'automatisme peut également transmettre l'identifiant ID2 du destinataire du message. Le message Msg3 lui-même peut constituer une information de dépassement de seuil. Alternativement, il peut comprendre une commande informant l'actionneur du dépassement de seuil et/ou une commande de mouvement vers la position de sécurité envoyée comme paramètre.

A la réception du message Msg3 au cours d'une étape E54, l'actionneur vérifie que le message lui est bien adressé ou du moins le concerne. Si le message Msg3 contient bien l'identifiant ID1 de l'automatisme et/ou son propre identifiant comme destinataire, l'actionneur en déduit qu'il s'agit bien d'un ordre de mouvement vers la position de sécurité SP contenue dans le message Msg3.

Le message Msg3 peut prendre par exemple la forme suivante : "Je suis ID1, je parle à ID2. Va à la position de sécurité : ...".

Un mouvement de l'écran 3 est alors réalisé par l'actionneur jusqu'à la position de sécurité SP au cours d'une étape E56.

Une fois le mouvement effectué, ou même en cours de mouvement, l'actionneur 2 peut émettre un message de retour d'information (étape E57) sur son état vers l'automatisme 20, ou vers un autre objet qui dispose par exemple d'un moyen d'affichage. Le retour d'information permet d'informer l'utilisateur de l'événement climatique qui perturbe son utilisation du produit (par exemple, "le store vient de s'enrouler parce qu'il y a du vent").

Dans le cas de la figure 8, lors de la configuration, l'automatisme 20 a transmis, à l'actionneur 2, son identifiant ID1 et le seuil T1. Le seuil peut également rester en mémoire de l'automatisme. La position de sécurité SP (ou le mouvement) reste stockée au niveau de l'actionneur. Ces différents paramètres (seuil, position) ont été associés à l'identifiant ID1. La position de sécurité peut également ou alternativement avoir été associée au seuil transmis.

En mode usage, l'automatisme 20 mesure de manière continue ou intermittente régulière dans une étape E61 le phénomène climatique considéré par l'intermédiaire d'un des capteurs 24 ou 25. L'automatisme émet, pour chaque mesure ou pour un nombre régulier de mesures, un message Msg4 au cours d'une étape E62 dans lequel il transmet au moins son identifiant ID1 et la mesure ou une valeur calculée à partir de mesures précédentes (par exemple une combinaison linéaires des mesures réalisées entre deux émissions de messages). A la différence du message Msg3 précédent, le message Msg4 ne comprend pas de commande proprement dite. II s'agit plutôt d'un message d'information.

A la réception du message Msg4, au cours d'une étape E64, l'actionneur vérifie que le message lui est bien adressé ou du moins le concerne. Si le message Msg4 contient bien l'identifiant ID1 de l'automatisme et/ou son propre identifiant comme destinataire, l'actionneur 2 en déduit qu'il s'agit bien d'un message d'information qui lui est destiné.

L'actionneur compare alors, au cours d'une étape E65, la mesure ou la valeur reçue dans le message Msg4 et le seuil T1 sélectionné et stocké en mémoire dans l'actionneur 2 et associé à l'identifiant ID1 et/ou ID2.

Si la mesure est supérieure au seuil T1, un mouvement de l'écran 3 est alors réalisé par l'actionneur jusqu'à la position de sécurité SP stockée dans la mémoire 14 de l'actionneur 2 au cours d'une étape E66.

Sinon, l'actionneur 2 attend un nouveau message en provenance de l'automatisme 20.

Une fois le mouvement effectué ou même en cours de mouvement, l'actionneur 2 peut émettre un message de retour d'information (étape E67) sur son état vers l'automatisme 20 ou vers un autre objet qui dispose par exemple d'un moyen d'affichage.

Selon les cas décrits, l'intelligence de calcul et le réveil associé des fonctions électroniques sont situés dans l'automatisme ou dans l'actionneur. Une position de sécurité ou de confort stockée au niveau de l'actionneur permet de développer un automatisme générique qui pourrait être utilisé avec tous les actionneurs susceptibles d'y être appairés, sans que cet automatisme n'ait à embarquer la connaissance de chaque application ou produit manoeuvré. Par rapport à l'état de l'art, le fait d'avoir stocké une position particulière à atteindre en cas d'événement climatique détecté permet de configurer l'installation réellement selon le désir de l'utilisateur. De plus, la définition de cette position au moment de la phase d'apprentissage et notamment au moment de la phase d'appairage des dispositifs de l'ensemble domotique, évite le recours à une interface supplémentaire, que ce soit au niveau de l'automatisme ou de l'actionneur. Ainsi, aucune interface utilisateur n'est nécessaire autre que celle prévue et connue permettant l'appairage ou le réglage de l'automatisme.

Alternativement, comme cela a été évoqué, un mouvement particulier (ou une direction particulière de mouvement) peut être enregistré comme mouvement à réaliser en cas d'événement climatique détecté. L'actionneur réagira de la même manière que dans les cas décrit. Lorsqu'un événement climatique est détecté, l'actionneur est conduit à déplacer l'écran depuis sa position courante dans le sens de mouvement qui a été enregistré, soit jusqu'à une fin de course, soit pendant une durée prédéterminée (et définie par une durée de parcours réalisée avant un arrêt manuel lors de la configuration).

De même, il est possible de définir plusieurs positions et plusieurs seuils, de sorte que l'écran soit piloté par étapes intermédiaires selon l'intensité du phénomène climatique détecté. Chaque position est alors associée à un identifiant particulier de l'automatisme.

Selon les caractéristiques du réseau de communication (unidirectionnel ou bidirectionnel), les différentes informations définies lors de la configuration seront stockées au niveau de l'actionneur ou de l'automatisme et retrouvables par l'un ou l'autre de ces objets communicants.

Pour assurer la compatibilité avec d'anciens actionneurs ou automatismes ou simplement répondre aux situations dans lesquelles aucune position particulière n'est définie lors de l'installation, il est possible de faire en sorte que l'automatisme émette un nouvel ordre de mouvement par défaut (par exemple dans le cas des communications bidirectionnelles, où l'automatisme est informé d'une absence de réaction de la part de l'actionneur) ou un enchaînement de commandes, qui, si l'actionneur ne connaît pas de position particulière, permettra de piloter l'écran vers une position par défaut.

L'invention permet de commander un écran mobile de manière parfaitement adaptée aux phénomènes climatiques environnants et d'autre part, de personnaliser cette commande très simplement en fonction des habitudes de vie de l'utilisateur final ou de l'application finale. Un intérêt majeur du procédé de l'invention est de limiter les besoins d'une interface évoluée, que ce soit au niveau de l'automatisme ou d'un point de commande, pour intégrer l'automatisme dans une installation dans la mesure où les comportements sont configurés en même temps que l'installation elle-même.

Dans la description précédente des différents modes d'exécution du procédé de configuration selon l'invention, l'événement climatique est le franchissement d'un seuil par la mesure issue d'un capteur de mesure de l'intensité d'un phénomène climatique (comme par exemple le franchissement d'un seuil par la mesure issue d'un capteur d'éclairement ou le franchissement d'un seuil par la mesure issue d'un capteur de vent). Bien évidemment, l'événement climatique peut aussi être la détection de l'existence d'une conséquence de l'événement climatique (comme par exemple la détection d'eau par un détecteur du fait de précipitations).

L'étape d'association de premières et deuxièmes informations, une fois réalisée, permet à l'actionneur et/ou à l'automatisme, à partir d'une première information, de retrouver les deuxièmes informations ou, à partir d'une deuxième information, de retrouver les premières informations.

Dans cette demande, on entend par « procédure de configuration » l'ensemble des actions réalisées entre une entrée dans un mode de configuration et la première sortie de ce mode de configuration suivant cette entrée.

## Revendications

1. Procédé de configuration d'un ensemble domotique (1) comprenant plusieurs éléments dont un actionneur (2) de manoeuvre d'un écran mobile (3) entre deux positions extrêmes et un automatisme (20) destiné à commander l'actionneur et muni d'un capteur (24, 25) pour détecter un phénomène climatique, l'actionneur et l'automatisme étant destinés à communiquer entre eux, **caractérisé en ce qu'**une information choisie de position de l'écran ou de mouvement de l'écran, est enregistrée et associée à une information caractérisant une relation de communication entre l'actionneur et l'automatisme, au niveau d'un élément de l'ensemble domotique.

2. Procédé de configuration selon la revendication précédente, **caractérisé en ce que** l'information choisie de position de l'écran ou de mouvement de l'écran, est enregistrée et associée à une information caractérisant une relation de communication entre l'actionneur et l'automatisme pendant une procédure de configuration, l'information caractérisant une relation de communication entre l'actionneur et l'automatisme étant enregistrée pendant cette même procédure de configuration.

3. Procédé de configuration selon la revendication 1 ou 2, **caractérisé en ce qu'**une information de seuil du phénomène climatique est enregistrée et associée à une information caractérisant une relation de communication entre l'actionneur et l'automatisme, au niveau d'un élément de l'ensemble domotique.

4. Procédé de configuration selon la revendication précédente, **caractérisé en ce que** l'information choisie de seuil du phénomène climatique, est enregistrée et associée à une information caractérisant une relation de communication entre l'actionneur et l'automatisme pendant une procédure de configuration, l'information caractérisant une relation de communication entre l'actionneur et l'automatisme étant enregistrée pendant cette même procédure de configuration.

5. Procédé de configuration selon l'une des revendications précédentes, **caractérisé en ce qu'**il comprend les étapes suivantes:
- entrée en mode de programmation de l'actionneur et de l'automatisme,
- pilotage de l'actionneur jusqu'à une position de réaction choisie de l'écran ou selon un mouvement ou dans un sens de mouvement choisi de l'écran et/ou sélection d'un seuil lié au phénomène climatique,
- enregistrement de premières informations comprenant :
• la position choisie de l'écran, le mouvement ou le sens de mouvement choisi de l'écran, et/ou
• un seuil du phénomène climatique,
- échange, entre l'actionneur et l'automatisme, de deuxièmes informations définissant au moins une relation de communication entre l'actionneur et l'automatisme,
- association entre les premières informations et les deuxièmes informations
- sortie du mode de programmation.

6. Procédé de configuration selon l'une des revendications précédentes, **caractérisé en ce que** la position choisie de l'écran est une position intermédiaire entre les deux positions extrêmes de l'écran ou une position extrême de l'écran.

7. Procédé de configuration selon la revendication 5 ou 6, **caractérisé en ce qu'**une nouvelle relation est établie entre l'actionneur et l'automatisme et remplace une précédente si l'une des premières ou deuxièmes informations est modifiée.

8. Procédé de configuration selon l'une des revendications précédentes, **caractérisé en ce que** la position choisie de l'écran et/ou le mouvement ou sens de mouvement choisi de l'écran est enregistré dans une mémoire de l'actionneur et associé à une information caractérisant la relation de communication entre l'actionneur et l'automatisme.

9. Procédé de configuration selon l'une des revendications précédentes, **caractérisé en ce que** la position choisie de l'écran et/ou le mouvement ou sens de mouvement choisi de l'écran est enregistré dans une mémoire de l'actionneur et désigné par un nom communiqué à l'automatisme.

10. Procédé de commande dans un ensemble domotique comprenant un actionneur et un automatisme muni d'un capteur pour détecter un phénomène climatique, comprenant une étape de mise en oeuvre du procédé de configuration selon l'une des revendications précédentes, **caractérisé en ce que** l'automatisme émet un signal comprenant au moins une information caractéristique de la relation de communication entre l'actionneur et l'automatisme, de sorte que, lorsqu'un événement climatique est détecté, l'actionneur déduise la position choisie de l'écran ou le mouvement ou le sens de mouvement choisi de l'écran, enregistré au moins en fonction de cette information, et manoeuvre l'écran mobile vers la position choisie de l'écran ou selon le mouvement ou dans le sens de mouvement choisi de l'écran.

11. Ensemble domotique (1) comprenant un actionneur (2) de manoeuvre d'un écran mobile (3) entre deux positions extrêmes et un automatisme (20) destiné à commander l'actionneur et muni d'un capteur (24, 25) pour détecter un phénomène climatique, l'actionneur et l'automatisme étant destinés à communiquer entre eux, **caractérisé en ce qu'**il comprend des moyens matériels (21, 22, 23, 24, 11, 12, 13, 14) et logiciels de mise en oeuvre du procédé selon l'une des revendications 1 à 10.
